# EUROPÄISCHE PATENTSCHRIFT

(11) **EP 2 720 921 B1**
(45) Veröffentlichungstag und Bekanntmachung des Hinweises auf die Patenterteilung: **30.10.2019**
(21) Anmeldenummer: 12724308.7
(22) Anmeldetag: 21.05.2012
(51) Int. Cl.: B60W 10/08, B60W 30/20, B60W 50/00

(54) **VERFAHREN ZUM DÄMPFEN MECHANISCHER SCHWINGUNGEN IN EINEM FAHRZEUG**
METHOD FOR DAMPING MECHANICAL VIBRATIONS IN A VEHICLE
PROCÉDÉ POUR AMORTIR LES VIBRATIONS MÉCANIQUES DANS UN VÉHICULE

(30) Priorität: 15.06.2011 DE 102011077525
(43) Veröffentlichungstag der Anmeldung: 23.04.2014
(73) Patentinhaber: Bayerische Motoren Werke Aktiengesellschaft, 80809 München (DE)
(72) Erfinder: CHRIST, Thomas, 81245 München (DE)
(86) Internationale Anmeldenummer: PCT/EP2012/059360
(87) Internationale Veröffentlichungsnummer: WO 2012/171750

(56) Entgegenhaltungen:
- WO-A1-01/14944
- WO-A1-2011/042928
- WO-A1-2012/043538
- DE-A1- 19 721 298
- DE-A1-102008 001 202
- DE-C2- 19 911 096
- FR-A1- 2 763 645
- JP-A- 2008 024 022

## Beschreibung

Die vorliegende Erfindung betrifft ein Verfahren zum Dämpfen mechanischer Schwingungen in einem Fahrzeug gemäß dem Oberbegriff des Patentanspruches 1.

Ein derartiges Verfahren ist aus der WO 01/14944 A1 bekannt. Zum technischen Hintergrund der vorliegenden Erfindung zählen die FR 2 763 645 A1 sowie die WO 2012/043538 A1.

Weiterer Stand der Technik ist den Druckschriften DE 197 21 298 A1, DE 199 110 96 C2, WO 2011/042928 A1, JP 2008 024002 A und der DE 10 2008 001202 A1 zu entnehmen.

Fahrzeuge mit Hybridantrieb weisen bekanntlich einen Antriebsstrang mit einem Verbrennungsmotor und mindestens einer elektrischen Maschine (elektrischer Antriebsmotor) auf. Zur weiteren Verringerung des Kraftstoffverbrauchs werden zunehmend Verbrennungsmotoren mit Abgasturboladern in Betracht gezogen, die im Vergleich zu herkömmlichen Verbrennungsmotoren bei geringeren Drehzahlen arbeiten und bei im Wesentlichen gleicher oder höherer Leistung weniger Zylinder aufweisen (z. B. 3-Zylindermotoren statt bisheriger 4-Zylindermotoren bzw. 4-Zylindermotoeren statt bisheriger 6-Zylindermotoren). Je geringer das Drehzahlniveau und die Anzahl der Zylinder eines Verbrennungsmotors ist, umso größer ist die aus der Verbrennung resultierende Drehungleichförmigkeit.

Um eine Übertragung solcher systembedingter Drehungleichförmigkeiten in den Antriebsstrang bzw. auf die Karosserie des Fahrzeugs zu vermeiden, müssen spezielle Maßnahmen ergriffen werden.

Einen ersten Ansatz hierzu beschreibt die DE 10 2005 001 047 A1 und zwar im Zusammenhang mit einem Hybridfahrzeug. Das Hybridfahrzeug weist einen Verbrennungsmotor mit mehreren Zylindern und eine zur Erzeugung von Fahrzeugvortrieb vorgesehene elektrische Maschine auf. Zur Einsparung von Kraftstoff können während des Betriebs des Verbrennungsmotors einzelne Zylinder "abgeschaltet" werden. Sie laufen dann unbefeuert mit. Eine Zylinderabschaltung ist naturgemäß mit einer Vergrößerung der Drehungleichförmigkeit des vom Verbrennungsmotors abgegebenen Drehmoments verbunden. Bei der DE 10 2005 001 047 A1 wird ein "Maß" für die Drehunförmigkeit ermittelt und in Abhängigkeit von diesem Maß wird die elektrische Maschine elektromotorisch oder generatorisch angesteuert, derart, dass sich die durch die Zylinderabschaltung hervorgerufene Vergrößerung der Drehungleichförmigkeit verringert. Einzelheiten zur Steuerung bzw. Regelung der elektrischen Maschine sind der DE 10 2005 001 047 A1 nicht zu entnehmen.

Aufgabe der Erfindung ist es, ein Verfahren zum Dämpfen mechanischer Schwingungen in einem (Hybrid-)Fahrzeug anzugeben, das mit vergleichsweise geringem Aufwand umsetzbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist der Gedanke, ein das momentane Schwingungsverhalten mindestens einer Fahrzeugkomponente beschreibende Signal einer Signalanalyse zu unterziehen und mittels des elektrischen Antriebsmotors des (Hybrid)-Fahrzeugs zu mindestens einer in dem Signal enthaltenen "Störfrequenz" ein dieser Störfrequenz entgegenwirkendes Kompensationsmoment zu erzeugen.

Der in der folgenden Beschreibung und in den Patentansprüchen verwendete Begriff "Fahrzeugkomponente" ist äußerst breit zu interpretieren. Er kann sich sowohl ein einzelnes Bauteil beziehen, als auch auf einen durch mehrere Bauteile gebildeten Bauteilverbund, wie z. B. eine Fahrzeugkarosserie, auf eine Funktionseinheit, wie z. B. die elektrische Maschine, o. ä.

Bei dem "das momentane Schwingungsverhalten der Fahrzeugkomponente beschreibenden Signal" kann es sich z. B. um ein Beschleunigungssignal handeln, z. B. um ein Beschleunigungssignal, welches die Beschleunigung (Vibration) des Fahrzeugsaufbaus (Fahrzeugkarosserie) bzw. einer Komponente des Fahrzeugaufbaus beschreibt.

Alternativ dazu könnte als das das momentane Schwingungsverhalten einer Fahrzeugkomponente beschreibende Signal auch eine Drehzahl einer Fahrzeugkomponente verwendet werden, z. B. die Drehzahl des Verbrennungsmotors oder die der elektrischen Maschine o. ä. Ferner oder alternativ dazu könnte das momentane Schwingungsverhalten auch mittels eines Signals beschrieben werden, welches ein gemessenes oder näherungsweise rechnerisch (z. B. durch einen Zustandsbeobachter) ermitteltes Antriebsmoment einer Fahrzeugkomponente (z. B. Achsmoment) beschreibt.

Gemäß der Erfindung kann vorgesehen sein, dass es sich bei der mindestens einen Störfrequenz, die im Rahmen der Signalanalyse (z. B. durch eine diskrete Fouriertransformation) untersucht wird, um eine vorgegebene, für den verwendeten Verbrennungsmotortyp spezifische, Störfrequenz handelt. Bei der mindestens einen Störfrequenz kann es sich insbesondere um eine so genannte "Motorordnung" handeln. Durch die Signalanalyse könnten auch Frequenzen jenseits der Motorordnungen ermittelt und bedämpft werden.

Bekanntlich gibt es in Abhängigkeit von der Bauweise eines Verbrennungsmotors (Reihenmotor, V-Motor) und der Anzahl seiner Zylinder neben der Grundfrequenz des Verbrennungsmotors ganz bestimmte so genannte "Harmonische". Die Frequenzen der Harmonischen (Störfrequenzen) sind häufig Vielfache der Grundfrequenz des Verbrennungsmotors. Bei machen Verbrennungsmotoren gibt es auch eine Harmonische, deren Frequenz der halben Grundfrequenz entspricht. Diese Störfrequenzen werden als sogenannte "(Motor-)Ordnungen" bezeichnet. Die Ordnungszahl gibt den Faktor in Bezug auf die Grundfrequenz an. So entspricht die 0,5-te Motorordnung derjenigen Störfrequenzkurve, deren Frequenz der halben Motordrehzahl entspricht. Die dritte Motorordnung entspricht derjenigen Störfrequenzkurve mit der dreifachen Motordrehzahl.

Gemäß der Erfindung ist vorgesehen, dass - je nach Typ des gerade vorliegenden Verbrennungsmotors - für eine, zwei, drei oder mehr Motorordnungen jeweils ein der zugeordneten Störfrequenz entgegenwirkendes Kompensationsmoment errechnet und über den elektrischen Antriebsmotor dem Antriebsstrang aufgeprägt wird.

Ergänzend ist vorgesehen, dass mindestens eine Störfrequenz oder mehrere Störfrequenzen durch eine Fourieranalyse ermittelt werden. Das genaue Verfahren zur Durchführung einer Fourieranalyse ist dem Fachmann hinlänglich aus dem Stand der Technik bekannt und muss daher nicht im Einzelnen erläutert werden. Hinweise hierzu finden sich z. B. in Brigham, E. Oran (1988). The fast Fourier transform and its applications. Englewood Cliffs, N.J.: Prentice Hall. ISBN 0-13-307505-2.

Sofern es sich bei dem das momentane Schwingungsverhalten der mindestens einen Fahrzeugkomponente beschreibenden Signal um ein analoges Signal handelt, kann vorgesehen sein, dass dieses mit einer vorgegebenen Abtastfrequenz abgetastet wird und das sich ergebende Abtastsignal einer diskreten Fouriertransformation (DFT) unterzogen wird. Durch Untersuchung des Frequenzgangs dieses Signals können sehr einfach diejenigen Frequenzen ermittelt werden, welche im Fahrzeug besonders störende Drehungleichförmigkeiten bzw. Vibrationen oder Geräusche verursachen.

Häufig ist zu beobachten, dass in dem das momentane Schwingungsverhalten der mindestens einen Fahrzeugkomponente beschreibenden Signal nicht nur eine einzige besonders herausragende Störfrequenz enthalten ist, sondern mehrere Störfrequenzen enthalten sind. Dementsprechend ist vorgesehen, dass mittels einer Elektronik zu mehreren in dem Signal enthaltenen Störfrequenzen zugeordnete Kompensationsmomente errechnet werden und diese zu dem von dem elektrischen Antriebsmotor des Hybridantriebs zu erzeugenden Kompensationsmoment superponiert werden.

Der Signalverlauf des zu einer bestimmten Störfrequenz zu erzeugenden Kompensationsmoments kann wie folgt generiert werden. Mittels eines Frequenzgenerators werden zwei periodische, um 90° phasenverschobene "Testsignale" erzeugt, welche jeweils dieselbe Frequenz wie die betrachtete, zu kompensierende Störfrequenz haben.

Mittels einer vorgegebenen Übertragungsfunktion, welche das Übertragungsverhalten zwischen dem elektrischen Antriebsmotor des (Hybrid-)Fahrzeugs und der mindestens einen Fahrzeugkomponente, deren Schwingungsverhalten überwacht wird, beschreibt, wird aus dem ersten Testsignal ein "erstes Testausgangssignal" und aus dem zweiten Testsignal ein "zweites Testausgangssignal" erzeugt.

Anschließend wird mittels eines dem Fachmann hinlänglich bekannten "Rekursiven-Least-Mean-Square-Algorithmus" ein sogenannter Adoptionskoeffizient ermittelt. Ein Rekursiver-Least-Mean-Square-Algorithmus ist z. B. aus Haykin, S. Adaptive Filter Theory. 3rd ed. Englewood Cliffs, NJ: Prentice Hall, 1996 bekannt.

Eingangssignale für den Least-Mean-Square-Algorithmus bilden das erste bzw. zweite Testausgangssignal und das das momentane Schwingungsverhalten der mindestens einen Fahrzeugkomponente beschreibende Signal.

Aus dem ersten Testausgangssignal und dem das momentane Schwingungsverhalten der mindestens einen Fahrzeugkomponente beschreibenden Signal wird ein "erster Adaptionskoeffizient" erzeugt. Aus dem zweiten Testausgangssignal und dem das momentane Schwingungsverhalten der mindestens einen Fahrzeugkomponente beschreibenden Signal wird ein "zweiter Adaptionskoeffizient" erzeugt.

Der erste Adaptionskoeffizient wird mit dem zugeordneten ersten Testsignal und der zweite Adaptionskoeffizient wird mit dem zugeordneten zweiten Testsignal zu einem ersten bzw. zweiten Korrekturterm multipliziert. Die Summe der beiden Korrekturterme beschreiben den Signalverlauf eines die betrachtete die Störfrequenz dämpfenden bzw. auslöschenden Kompensationsmoments.

In der oben beschriebenen Weise werden mittels einer Elektronik für mehrere Störfrequenzen zugeordnete Kompensationsmomentverläufe berechnet. Diese werden dann zu dem superponiert, d.h. addiert zu dem oben erwähnten (Gesamt-)Kompensationsmoment, welches von dem Antriebsstrangs des Fahrzeugs von dem elektrischen Antriebsmotor aufgeprägt wird. Der elektrische Antriebsmotor wird also so angesteuert, dass er ein (Gesamt-)Kompensationsmoment erzeugt, welches die einzelnen Störfrequenzen dämpft oder idealerweise sogar vollständig tilgt. Zusammenfassend werden mit der Erfindung insbesondere folgende Vorteile erreicht:
- Das dargestellte Verfahren erlaubt eine einfache Möglichkeit zur Dämpfung von Schwingungen im Antriebsstrang für Hybridfahrzeuge
- Das Verfahren ist einfach zu applizieren, da nur wenige Parameter einzustellen sind.
- Das Verfahren benötigt nur geringe Sensorsignale. Somit entfallen aufwendige Kommunikation zwischen Steuergeräten.
- Der Algorithmus ist wenig anfällig für Signallaufzeiten.

Im Folgenden wird die Erfindung im Zusammenhang mit der Zeichnung näher erläutert. Es zeigen:
- Figur 1: eine schematische Darstellung eines Regelkreises zur Dämpfung mechanischer Schwingungen in einem Fahrzeug;
- Figur 2: die im Regelkreis der Figur 1 implementierte Groblogik zur Erzeugung eines Kompensationsmoments;
- Figur 3: die der Groblogik der Figur 2 zugrundeliegende Logik zur Erzeugung eines Kompensationsmoments für eine bestimmte Störfrequenz.

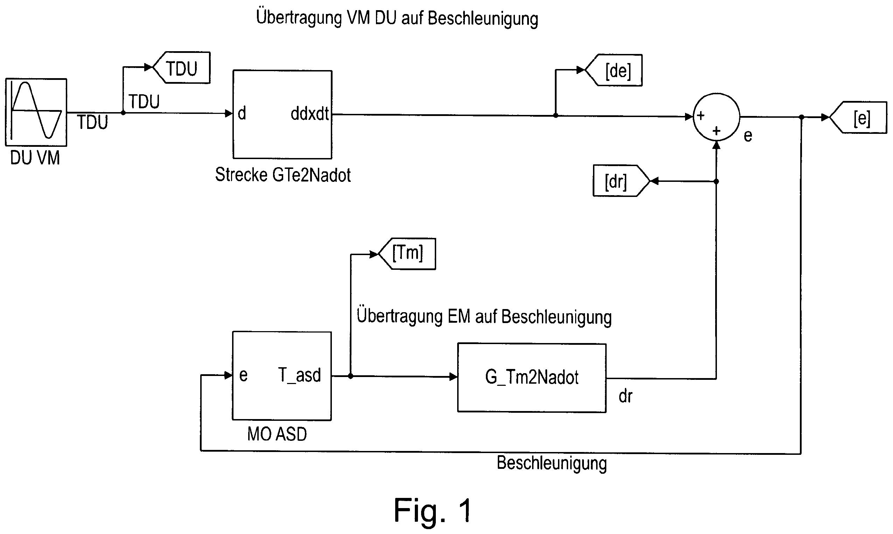

Figur 1 beschreibt ein Regelkreismodell eines Fahrzeugs, das einen Antriebsstrang mit einem Verbrennungsmotor und einem elektrischen Antriebsmotor aufweist.

Der Verbrennungsmotor erzeugt ein Antriebsmoment TDU, das mit einer gewissen Drehungleichförmigkeit DU VM behaftet ist. Das Antriebsmoment TDU wird über den Antriebsstrang zu Antriebsrädern des Fahrzeugs übertragen. Die dem Antriebsmoments TDU anhaftende Drehungleichförmig DU VM äußert sich z. B. darin, dass eine bzw. mehrere Komponenten des Fahrzeugs bei bestimmten (Antriebs-)Drehzahlen zu schwingen beginnen. Werden derartige Störfrequenzen z. B. in den Aufbau (Karosserie) des Fahrzeugs eingeleitet, so kann dies akustisch als sehr unangenehm empfunden werden.

In dem in Figur 1 gezeigten Regelkreismodell wird das Übertragungsverhalten der "Strecke" zwischen dem Verbrennungsmotor, an oder in dem die Drehungleichförmigkeiten DU VM generiert werden, und der Fahrzeugkomponente (z. B. des Karosserieaufbaus), deren momentanes Schwingungsverhalten analysiert bzw. überwacht wird, rechnerisch durch die Übertragungsfunktion "GTe2Nadot(z)" abgebildet. Der von dem Verbrennungsmotor erzeugte Störschwingungsanteil ist in Figur 1 mit dem Symbol de bezeichnet.

Bei der Übertragungsfunktion GTe2Nadot(z) handelt es sich z. B. um eine zeitdiskrete lineare Übertragungsfunktion. Sie kann z. B. durch Aufstellen eines physikalischen Fahrzeugmodells oder durch datengetriebene Modellierungsverfahren gewonnen werden. Die Parameter der Übertragungsfunktion GTe2Nadot(z) können z. B. mit dem in der deutschen Patentanmeldung DE 10 2010 007 735 beschriebenen Verfahren ermittelt werden.

Wie bereits erwähnt, weist der Antriebsstrang des in Figur 1 modellierten Fahrzeugs ferner einen elektrischen Antriebsmotor (nicht dargestellt) auf. Das Übertragungsverhalten zwischen dem elektrischen Antriebsmotor und der "überwachten Fahrzeugkomponente" wird durch die Übertragungsfunktion "G_Tm2Nadot(z)" beschrieben. Sie kann in analoger Weise ermittelt werden wie die Übertragungsfunktion GTe2Nadot(z). Der von dem elektrischen Antriebsmotor erzeugte Beschleunigungs- Störschwingungsanteil ist in Figur 1 mit dem Symbol dr gekennzeichnet.

Die durch den Verbrennungsmotor erzeugte Anregung de und die durch den elektrischen Antriebsmotor erzeugte Anregung dr superponieren sich zu dem Signal e, welches das Schwingungsverhalten einer konkret betrachteten Fahrzeugkomponente (z. B. Fahrzeugaufbau bzw. Karosserie) beschreibt.

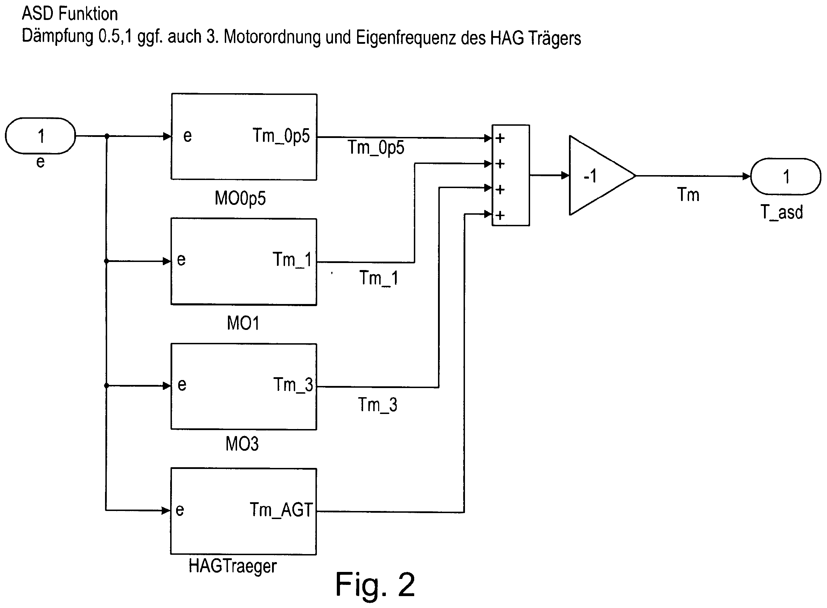

Das Signal e kann auch als "Fehlersignal" interpretiert werden. Es wird rückgeführt und bildet ein Eingangssignal eines Logikblocks bzw. Moduls "MO ASD", welcher bzw. welches den elektrischen Antriebsmotor so ansteuert, dass dieser ein dem Fehlersignal entgegenwirkendes Kompensationsmoment erzeugt, was in Zusammenhang mit Figur 2 noch näher erläutert wird.

Die Aufbaubeschleunigung (Fehelrsignal) e = de + dr wird bei dem in Figur 2 gezeigten Ausführungsbeispiel den Logikmodulen Tm_0p5, Tm_1, Tm_3 und Tm_HAGT zugeführt. In dem Modul Tm_0p5 wird der Verlauf eines der 0,5ten Motorordnung zugeordneten Kompensationsmoments errechnet. In dem Modul Tm_1 wird der Verlauf eines der ersten Motorordnung zugeordneten Kompensationsmoments errechnet. In dem Modul Tm_3 wird der Verlauf eines der dritten Motorordnung zugeordneten Kompensationsmoments errechnet. Diese Motorordnungen sind abhängig vom konstruktiven Aufbau der Verbrennungskraftmaschine. In dem Modul Tm_HAGT wird der Verlauf eines Kompensationsmoments errechnet, welches Schwingungen des Hinterachsträgers HAGT dämpfen bzw. tilgen soll.

Die in den vorgenannten Logikmodulen errechneten Kompensationsmomente werden in einem Additionsblock superponiert und als von dem elektrischen Antriebsmotor zu erzeugendes (Gesamt-) Kompensationsmoment T_asd ausgegeben.

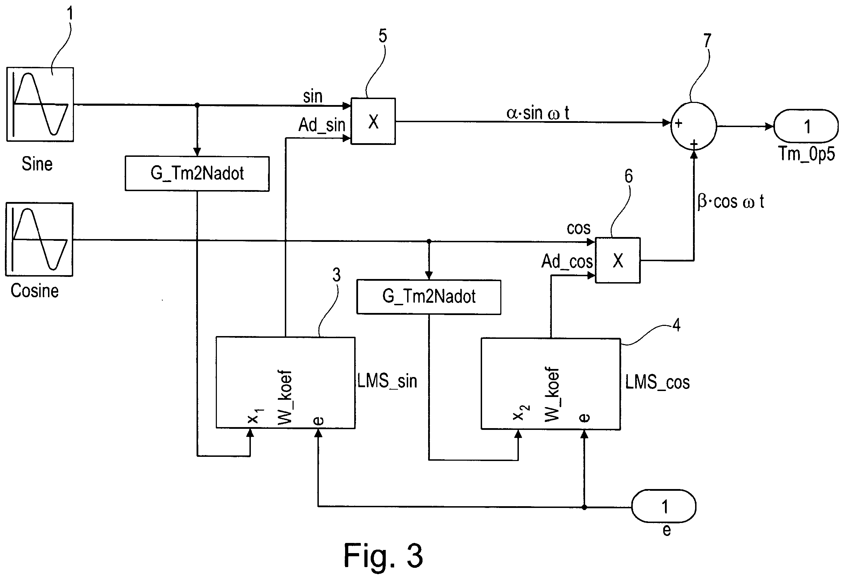

Figur 3 beschreibt eine Logik, mit der für die 0,5te Motorordnung ein der betreffenden Störfrequenz zugeordnetes Kompensationsmoment Tm_0p5 berechnet werden kann. Ganz entsprechend können auch für andere Störfrequenzen Kompensationsmomente berechnet werden.

Mittels eines Frequenzgenerators werden zwei periodische, um 90° phasenverschobene Signale erzeugt (bzw. in einem Steuergerät des Fahrzeugs wird dies über einen "zeitgesteuerten Lookup" realisiert). Bei der in Figur 3 gezeigten Logik sind dies ein Sinussignal 1 und ein Kosinussignal 2. Die beiden Signale 1, 2 haben eine der betrachteten Störfrequenz, d. h. der 0,5ten Motorordnung, entsprechende Frequenz.

Die zu analysierenden Störfrequenzen werden in Abhängigkeit von dem betrachteten Verbrennungsmotor über eine Fourieranalyse, insbesondere ein eine diskrete Fourieranalyse, vorab oder zyklisch während des Betriebs des Fahrzeugs ermittlet.

Aus den beiden Testsignalen 1, 2 wird mittels der oben bereits eingeführten Übertragungsfunktion G_Tm2Nadot(z) ein erstes Testausgangssignal x₁ und ein zweites Testausgangssignal x₂ erzeugt.

In den Logikmodulen 3, 4 wird mittels eines vorgegebenen rekursiven Least-Mean-Square-Algorithmus ein erster Adaptionskoeffizient Ad_sin und ein zweiter Adaptionskoeffizient Ad_cos erzeugt.

Als Eingangsparameter für die beiden "Least-Mean-Square-Module" 3, 4 werden das zugeordnete erste Testausgangssignal x₁ bzw. das zugeordnete zweite Testausgangssignal x₂ und das das Schwingungsverhalten der betrachteten Fahrzeugkomponente (z. B. des Aufbaus) beschreibende Signal e (z. B. Aufbaubeschleunigung e = de + dr) verwendet.

Der erste Adaptionskoeffizient Ad_sin wird mit dem zugeordneten ersten Testsignal 1 durch einen Multiplikator 5 zu einem ersten Korrekturterm *α* x sin ω t multipliziert. Dementsprechend wird der zweite Adaptionskoeffizient Ad_cos mit dem zugeordneten zweiten Testsignal 2 in einem Multiplikator 6 zu einem zweiten Korrekturterm *β* x cos ω t multipliziert.

Die beiden Korrekturterme *α* x sin ω t und *β* x cos ω t werden durch einen Summierer 7 zu dem Verlauf des der betrachteten Störfrequenz (0,5te Motorordnung) zugeordneten Kompensationsmoments Tm_0p5 superponiert.

## Patentansprüche

1. Verfahren zum Dämpfen mechanischer Schwingungen, insbesondere Torsionsschwingungen, in einem Fahrzeug, das einen Antriebsstrang mit einem Verbrennungsmotor und einem elektrischen Antriebsmotor aufweist, wobei
- ein das momentane Schwingungsverhalten mindestens einer Fahrzeugkomponente beschreibende Signal (e) einer Schwingungsanalyse unterzogen wird, und
- zu mindestens einer in dem Signal (e) enthaltenen Störfrequenz mittels des elektrischen Antriebsmotors ein dieser Störfrequenz entgegenwirkendes Kompensationsmoment (Tm, Tm_0p5, Tm_1, Tm_3) erzeugt wird,
wobei die mindestens eine Störfrequenz durch eine Fourieranalyse des das momentane Schwingungsverhalten mindestens einer Fahrzeugkomponente beschreibenden Signals (e) ermittelt wird, **dadurch gekennzeichnet, dass** mittels einer Elektronik (MO ASD) zu mehreren in dem Signal (e) enthaltenen Störfrequenzen zugeordnete Kompensationsmomente (Tm_0p5, Tm_1, Tm_3) ermittelt und diese zu dem von dem elektrischen Antriebsmotor zu erzeugenden Kompensationsmoment (Tm) überlagert werden, so dass ein Gesamtkompensationsmoment (T_asd) erzeugt wird, das dem Antriebsstrang über den elektrischen Antriebsmotor aufgeprägt wird, und wobei
der Verlauf des einer Störfrequenz zugeordneten Kompensationsmoments (Tm_0p5, Tm_1, Tm_3) auf der Basis einer Überlagerung zweier periodischer, um 90° phasenverschobener Testsignale, (1, 2), welche jeweils eine der betrachteten Störfrequenz entsprechende Frequenz haben, erzeugt wird, und wobei
aus jedem der Testsignale (1, 2) mittels einer vorgegebenen Übertragungsfunktion (G_TM2Nadot), welche das Übertragungsverhalten zwischen dem elektrischen Antriebsmotor und der mindestens einen Fahrzeugkomponente beschreibt, ein erstes bzw. ein zweites Testausgangssignal (x1, x2) erzeugt wird, und wobei
aus dem ersten bzw. zweiten Testausgangssignal (x₁, x₂) und dem das momentane Schwingungsverhalten der mindestens einen Fahrzeugkomponente beschreibenden Signal (e) mittels eines vorgegebenen Least-Mean-Square-Algorithmus ein erster bzw. zweiter Adaptionskoeffizient (Ad_sin, Ad_cos) erzeugt wird und mit dem zugeordneten ersten bzw. zweiten Testsignal (1, 2) zu einem ersten bzw. zweiten Korrekturterm (α x sin ω t, β x cos ω t) multipliziert wird.

2. Verfahren nach Anspruch 1, **dadurch gekennzeichnet, dass** es sich bei der mindestens einen Störfrequenz um eine vorgegebene, für den verwendeten Verbrennungsmotortyp spezifische Störfrequenz, insbesondere um eine vorgegebene Motorordnung, handelt.

3. Verfahren nach einem der Ansprüche 1 oder 2, **dadurch gekennzeichnet, dass** das das momentane Schwingungsverhalten der mindestens einen Fahrzeugkomponente beschreibende Signal (e) mit einer vorgegebenen Abtastfrequenz abgetastet und das Abtastsignal einer diskreten Fourieranalyse unterzogen wird.

4. Verfahren nach einem der Ansprüche 1 bis 3, **dadurch gekennzeichnet, dass** das einer Störfrequenz zugeordnete Kompensationsmoment (Tm_0p5, Tm_1, Tm_3) durch Addieren der beiden der Störfrequenz zugeordneten Korrekturterme (α x sin ω t, β x cos ω t) gebildet wird.

5. Verfahren nach einem der vorangehenden Ansprüche, **dadurch gekennzeichnet, dass** das das momentane Schwingungsverhalten der mindestens einen Fahrzeugkomponente beschreibende Signal (e) unmittelbar mittels einer Sensorik gemessen oder mittels eines vorgegebenen Algorithmus näherungsweise aus mindestens einem bekannten Signal ermittelt wird.

6. Verfahren nach einem der vorangehenden Ansprüche, **dadurch gekennzeichnet, dass** das das momentane Schwingungsverhalten der mindestens einen Fahrzeugkomponente beschreibende Signal (e) ein Beschleunigungssignal einer Karosserie des Fahrzeugs ist.

7. Verfahren nach einem der vorangehenden Ansprüche, **dadurch gekennzeichnet, dass** das das momentane Schwingungsverhalten der mindestens einen Fahrzeugkomponente beschreibende Signal ein Drehzahlsignal des Verbrennungsmotors oder des elektrischen Antriebsmotors ist.

8. Verfahren nach einem der vorangehenden Ansprüche, **dadurch gekennzeichnet, dass** das das momentane Schwingungsverhalten der mindestens einen Fahrzeugkomponente beschreibende Signal ein Signal ist, welches das von einer Drehmoment übertragenden Komponente des Antriebsstrangs übertragene Drehmoment beschreibt.

## Claims

1. A method for damping mechanical vibrations, especially torsional vibrations, in a vehicle which has a drive train with an internal combustion engine and an electric drive motor, wherein
- a signal (e) which describes the instantaneous vibration behaviour of at least one vehicle component is subjected to a modal analysis, and
- for at least one interference frequency contained in the signal (e) a compensation torque (Tm, Tm_0p5, Tm_1, Tm_3) which counteracts this interference frequency is generated by means of the electric drive motor, wherein the at least one interference frequency is determined by a Fourier analysis of the signal (e) which describes the instantaneous vibration behaviour of at least one vehicle component, **characterised in that**
by means of an electronic unit (MO ASD) compensation torques (Tm_0p5, Tm_1, Tm_3) which are associated with a plurality of interference frequencies contained in the signal (e) are determined and these are superposed on the compensation torque (Tm) to be generated by the electric drive motor, so that an overall compensation torque (T_asd) is generated which is impressed on the drive train by way of the electric drive motor, and wherein
the curve of the compensation torque (Tm_0p5, Tm_1, Tm_3) which is associated with an interference frequency is generated based on the superposition of two periodic test signals (1, 2) which are phase-shifted by 90°, which in each case have a frequency corresponding to the interference frequency considered, and wherein
a first or a second test output signal (x₁, x₂) is generated from each of the test signals (1, 2) by means of a predetermined transmission function (G_TM2Nadot) which describes the transmission behaviour between the electric drive motor and the at least one vehicle component, and wherein a first or second adaption coefficient (Ad_sin, Ad_cos) is generated from the first or second test output signal (x₁, x₂) and the signal (e) which describes the instantaneous vibration behaviour of the at least one vehicle component by means of a predetermined least-mean-square algorithm and said coefficient is multiplied with the associated first or second test signal (1, 2) to give a first or second correction term (α x sin ω t, β x cos ω t).

2. A method according to Claim 1, **characterised in that** the at least one interference frequency is a predetermined interference frequency specific to the type of internal combustion engine used, especially a predetermined engine order.

3. A method according to one of Claims 1 or 2, **characterised in that** the signal (e) which describes the instantaneous vibration behaviour of the at least one vehicle component is sampled with a predetermined sampling frequency, and the sampling signal is subjected to a discrete Fourier analysis.

4. A method according to one of Claims 1 to 3, **characterised in that** the compensation torque (Tm_0p5, Tm_1, Tm_3) associated with an interference frequency is formed by adding the two correction terms (α x sin ω t, β x cos ω t) associated with the interference frequency.

5. A method according to one of the preceding claims, **characterised in that** the signal (e) which describes the instantaneous vibration behaviour of the at least one vehicle component is measured directly by means of a sensor system, or is determined by means of a predetermined algorithm approximately from at least one known signal.

6. A method according to one of the preceding claims, **characterised in that** the signal (e) which describes the instantaneous vibration behaviour of the at least one vehicle component is an acceleration signal of a body of the vehicle.

7. A method according to one of the preceding claims, **characterised in that** the signal which describes the instantaneous vibration behaviour of the at least one vehicle component is a rotational-speed signal of the internal combustion engine or of the electric drive motor.

8. A method according to one of the preceding claims, **characterised in that** the signal which describes the instantaneous vibration behaviour of the at least one vehicle component is a signal which describes the torque transmitted by a torque-transmitting component of the drive train.

## Revendications

1. Procédé pour amortir les vibrations mécaniques notamment les vibrations de torsion dans un véhicule comportant une ligne de transmission avec un moteur à combustion interne et un moteur électrique,
selon lequel,
- on soumet un signal (e) correspondant au comportement oscillant instantané d'au moins un composant du véhicule à une analyse d'oscillations, et
- on génère un moment de compensation (Tm, Tm_0p5, Tm_l, Tm_3) agissant contre la fréquence parasite contenue dans le signal (e) à l'aide d'un moteur d'entraînement électrique,
- cette fréquence parasite se déterminant par une analyse de Fourier du signal (e) décrivant le comportement oscillant instantané d'au moins un composant du véhicule,
**caractérisé en ce que**
à l'aide d'une électronique (MO ASD) on détermine les moments de compensation (Tm_0p5, Tm_1, Tm_3) des fréquences parasites contenues dans le signal (e) et on les combine au moment de compensation (Tm) généré par le moteur électrique de façon à générer un moment compensation total (T_asd) qui est appliqué à la ligne de transmission par le moteur électrique, et
on génère la courbe du moment de compensation (Tm_0p5, Tm_1, Tm_3) associée à la fréquence parasite sur la base de la combinaison de deux signaux de test (1, 2) périodiques, déphasés de 90°, et qui ont chacun une fréquence correspondant à la fréquence parasite observée, et
à partir de chaque signal de test (1, 2) à l'aide d'une fonction, transfert prédéfinie (G_TM2Nadot), qui décrit le comportement de transfert entre le moteur électrique d'entraînement et au moins un composant du véhicule, on génère un premier et un second signal de sortie de test (x1, x2), et
à partir du premier et du second signal de test (x1, x2) et du signal (e) décrivant le comportement oscillant instantané d'au moins un composant du véhicule, à l'aide d'un algorithme prédéfini du moindre carré moyen, on génère un premier, un second coefficient d'adaptation à (Ad_sin, Ad_cos), et avec le premier et le signal de test (1, 2) associés on multiplie avec un premier ou un second terme correcteur (α x sin ω t, β x cos ω t).

2. Procédé selon la revendication 1,
**caractérisé en ce que**
la fréquence parasite est une fréquence parasite spécifique pour le type de moteur à combustion interne utilisé, prédéfinie, notamment pour une disposition de moteur prédéfinie.

3. Procédé selon l'une des revendications 1 ou 2,
**caractérisé en ce que**
le signal (e) décrivant le comportement oscillant instantané d'au moins un composant du véhicule est détecté selon fréquence de détection prédéfinie et on soumet le signal de détection à une analyse de Fourier discrète.

4. Procédé selon l'une des revendications 1 à 3,
**caractérisé en ce qu'**
on forme le moment de compensation (Tm_0p5, Tm_1, Tm_3) associé à la fréquence parasite par l'addition des deux termes correcteurs (α x sin ω t, β x cos ω t) appartenant à la fréquence parasite.

5. Procédé selon l'une des revendications précédentes,
**caractérisé en ce que**
le signal (e) décrivant le comportement oscillant instantané d'au moins d'un composant du véhicule est mesuré directement à l'aide de capteurs ou est déterminé selon un algorithme prédéfini, de manière approximative à partir d'au moins un signal connu.

6. Procédé selon l'une des revendications précédentes,
**caractérisé en ce que**
le signal (e) décrivant le comportement oscillant instantané d'au moins un composant du véhicule est un signal d'accélération la carrosserie du véhicule.

7. Procédé selon l'une des revendications précédentes,
**caractérisé en ce que**
le signal décrivant le comportement oscillant instantané d'au moins un composant du véhicule est le signal de rotation du moteur à combustion ou du moteur électrique d'entraînement.

8. Procédé selon l'une des revendications précédentes,
**caractérisé en ce que**
le signal décrivant le comportement oscillant instantané d'au moins un composant du véhicule est un signal qui décrit le moment transmis par un composant de la ligne de transmission, transmettant un moment.
